# EUROPEAN PATENT SPECIFICATION

(11) **EP 3 531 279 B1**
(45) Date of publication and mention of the grant of the patent: **22.10.2025**
(21) Application number: 17864138.7
(22) Date of filing: 17.10.2017
(51) Int. Cl.: G06F 9/44, G06F 16/95, G06F 16/957, G06F 11/07, G06F 9/451

(54) **METHOD AND APPARATUS FOR DETECTING PAGE REDIRECT LOOP**
VERFAHREN UND VORRICHTUNG ZUR ERKENNUNG VON SEITENUMLEITUNGSZIRKULATION
PROCÉDÉ ET APPAREIL DE DÉTECTION DE CIRCULATION DE REDIRECTION DE PAGE

(30) Priority: 24.10.2016 CN 201610949251
(43) Date of publication of application: 28.08.2019
(73) Proprietor: Advanced Nova Technologies (Singapore) Holding Pte. Ltd., Singapore 189773 (SG)
(72) Inventor: CHEN, Ziqiang, Hangzhou Zhejiang 311121 (CN)
(74) Representative: Marks & Clerk LLP
(86) International application number: PCT/CN2017/106539
(87) International publication number: WO 2018/077072

(56) References cited:
- CN-A- 103 678 364
- CN-A- 103 678 364
- CN-A- 104 468 852
- CN-A- 104 881 603
- CN-A- 107 025 107
- US-A1- 2005 010 662
- US-A1- 2010 083 132
- US-A1- 2010 083 132

## Description

### Technical Field

The present invention relates to computer technologies, and in particular, to a method and an apparatus for detecting a page redirect loop.

### Background

In a page display process, page redirection sometimes is performed due to various reasons. For example, when a transaction page is being rendered, if it is detected that a user has not logged in or the user's login has expired, the access to the transaction page can be redirected to a login page. After the user's login succeeds, the access is redirected to the transaction page. In the page redirection process, at least one page is often involved, and a redirect chain may be formed including multiple pages transitioning from one to another, such as A→B→C, which indicates that the access to page A is redirected to page B, and then redirected to page C. However, it is possible that a page redirect loop, such as A→B→C→A→B→C..., occurs due to a processing error on a node page of the redirect chain. This will result in a great pressure on the backend of each page and a waste of processing resources. Therefore, it is very important to quickly and effectively detect a page redirect loop, so as to take measures to fix it timely.

An existing method for detecting a page redirect loop can be detecting whether a cycle exists in a redirect chain, and determining that a page redirect loop occurs if a cycle exists. However, this method requires acquisition of complete information of the redirect chain. When the chain is relatively long, a large amount of processing resources will be consumed to acquire the information. Moreover, it is sometimes impossible to acquire complete information of a redirect chain. For example, in a scenario of cross-site trusted login, a redirect chain may include sites belonging to different owners, making it difficult to acquire information of the chain, thereby restricting applications of the existing method.

Document US 2010/0083132 discloses a system for preventing redirection loops during collaborative web browsing.

### Summary

The invention provides a method and an apparatus as set out in the accompanying claims.

With the method and the apparatus for detecting a page redirect loop according to the present invention, the occurrence of a redirect loop can be determined by monitoring a single node page in a redirect chain and analyzing the sequence of access times at which the single page is accessed. Since this method does not need to acquire the entire redirect chain, it is relatively simple to implement the method and the consumption of system resources is reduced. Moreover, even in a cross-site page redirect scenario, since a loop can be determined by monitoring a single page without acquiring information about other sites, the method can be more widely applied.

### Brief Description of the Drawings

FIG. 1 is a flow chart of a method for detecting a page redirect loop according to some embodiments of the present application;
FIG. 2 is a schematic structural diagram of an apparatus for detecting a page redirect loop according to some embodiments of the present application;
FIG. 3 is a schematic structural diagram of another apparatus for detecting a page redirect loop according to some embodiments of the present application.

### Detailed Description

A page redirect loop means that, during a process of displaying page-type resources, a cycle appears in a redirect chain due to various reasons. For example, in an exemplary redirect chain, such as A→B→C--... A→B→C, transition is repeated among the page A, page B, and page C, which undoubtedly will result in a great pressure on the backend of each page.

The embodiments of the present application expect to use features of page redirect loops as the basis for detecting and identifying the occurrence of a page redirect loop. Still taking the above-described chain "A→B→C--... A→B→C" that has a page redirect loop as an example, in the circular redirect among the pages, a node page in the pages will be accessed repeatedly. For example, taking the page B as an example, after the page B is first accessed, it will be accessed again after a short time, and again after another short time. The times when the page B is accessed are recorded, and a sequence of access times will thus be formed, such as "t1, t2, t3, ..."

Moreover, another feature is that the transition chain in a page redirect loop is fixed. In the above example, the circular redirect always happens among the page A, page B, and page C. Therefore, in the time sequence of accesses to the page B, the page B will be accessed repeatedly always at a relatively fixed interval. For example, the access to the page B is periodic in terms of time.

Based on the above features of a page redirect loop, the embodiments of the present application provide a method for detecting a page redirect loop. The method can determine the occurrence of the page redirect loop by monitoring a node page of the transition chain of the page redirect loop. Taking the above-described circular redirect from the page A to the page C "A→B→C--... A→B→C" as an example, any one of the page A, page B, and page C can be monitored, which is not limited in the present example.

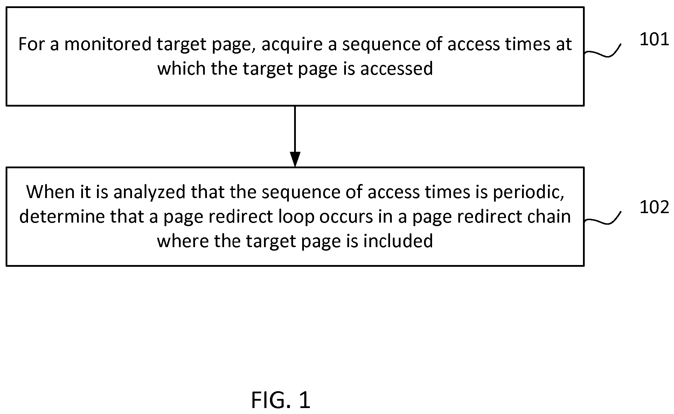

FIG. 1 is a flow chart of a method for detecting a page redirect loop. The method can include:
Step 101, for a monitored target page, acquiring a sequence of access times at which the target page is accessed, the target page being a node page in a page redirect chain.

The monitoring method in the present example can be implemented by a monitoring system. When a page is to be monitored, the to-be-monitored page can be added as a monitored object of the monitoring system. For example, in a redirect chain, some of the pages of the chain may experience exception, leading to the occurrence of a redirect loop. This can be determined through a pre-analysis. Namely, in a potential redirect loop, what pages will be accessed in a circular manner can be pre-analyzed. For example, still taking the above-described redirect chain "A→B→C--... A→B→C" as an example, if a page redirect loop occurs, it is very likely that the page B will be accessed in a circular manner in the redirect loop. The monitoring system can be set to initiate monitoring on the page B, and the page B can be referred to as a monitored target page. The target page selected in the present example is a node page of the page redirect chain.

In this step, in the page transition of a redirect loop, the page B will be accessed repeatedly at an time interval. The monitoring system can obtain a sequence of times of accesses to the page B. For example, the sequence can be t1, t2, t3, ..., tn, indicating that the page B is accessed at the moment of t1, again at the moment of t2, once more at the moment of t3, and so on. The sequence of the times of accesses to the page B can be, for example, obtained by the monitoring system from a page access log recorded at the backend of the page B.

Step 102, when it is analyzed that the sequence of access times is periodic, determining that a page redirect loop occurs in the page redirect chain where the target page is included.

The monitoring system analyzes the sequence of access times "t1, t2, t3, ..., tn" obtained in the step 101 to determine whether the access times in the sequence are periodic. For example, assuming that the interval between t1 and t2 is 2 seconds, one ideal situation is that the interval between t2 and t3 is also 2 seconds, so is the interval between t3 and t4, and so on. In other words, the page B is accessed at a fixed interval of 2 seconds, and then it can be determined that the sequence of access times is periodic.

However, the above-described intervals between the access times in the sequence may typically be different. For example, the interval between t1 and t2 is 2 seconds, the interval between t2 and t3 is 1.8 seconds, the interval between t3 and t4 is 2.1 seconds, etc. The sequence of access times is "2, 1.8, 2.1, 2.2, 1.9, ...," i.e., the intervals among the access times fluctuate within a range. Overall, the intervals are stable around a fixed value. Therefore, the sequence of access times can also be regarded to be periodic.

According to the invention, a number of methods for monitoring periodicity of time sequences can be used, that is a spectrum analysis-based Fourier analysis, a periodogram based detection method, a maximum entropy based detection method, to identify whether the above-described time sequence is periodic and to determine the occurrence of a loop with a level of confidence and an accuracy.

In one example, in the process of detecting the periodicity of a time sequence, a period length of the time sequence can be determined. For example, some possible period lengths can be preset and referred to as candidate period values; a level of confidence and a period threshold value can be set for period lengths, and the level of confidence for the candidate period values can be greater than or equal to a given period threshold value. The period's confidence for a time sequence indicates the number of times in a row that a pattern appears before the time sequence can be regarded as periodic. A periodic time sequence may allow some noises to exist therein, but the noises cannot appear more than a number of times. If the noises occur in the time sequence more than a number of times, the periodicity may no longer exist in the time sequence.

In addition, in the present example, the page B is a node page in the page redirect chain. When the sequence of access times of the page B is determined to be periodic, it can be determined that a page redirect loop occurs in the redirect chain where the page B is included.

After the monitoring system determines the occurrence of a page redirect loop, the monitoring system can take measures to warn against the occurrence of the redirect loop and can send redirect loop alarm information. For example, the redirect loop alarm information can include a text message or email notice sent to relevant technical personnel, so that the technical personnel decides on corresponding subsequent processing measures. Alternatively, the monitoring system can determine that, when the occurrence of the redirect loop is detected, new access requests are automatically rejected. According to the invention, an agent module is provided in a transaction system to which the page belongs, and the agent module can receive requests to access the page and perform corresponding processing. When the monitoring system determines, by using the detection method according to the present application, that a page redirect loop occurs in the redirect chain where the page is included, alarm information is sent to the agent module to notify the agent module, and the agent module rejects an access to the page when the agent module receives a request to access the page afterward.

In the detection method according to the embodiments of the present application, the occurrence of a redirect loop can be determined by monitoring a single node page in a redirect chain and analyzing the sequence of access times of the single page. Since this method does not need to acquire the entire redirect chain, it is relatively simple to implement the method and the consumption of system resources is reduced. Moreover, even in a cross-site page redirect scenario, since a loop can be determined by monitoring a single page without acquiring information about other sites, the method can be more widely applied.

In one example, the sequence of access times of a target page obtained by the monitoring system can be a sequence of access times recorded in a user dimension or in a device dimension. For example, the sequence of access times can be a sequence of the access times at which the same user accesses the page B; alternatively, the sequence of access times can be a sequence of access times at which the same device accesses the page B. In some other examples, the access time sequence can be access times recorded in other dimensions.

For example, a user goes online on his/her personal computer and accesses some sites. A page redirect loop occurs during the access process. The redirect loop can be "g1-g2-g3-g1-g2-g3..." A backend access log corresponding to one page records access information of the page. The access information of the page can include a variety of information, such as an account number of a user accessing the page (e.g., when a user logs in an account registered with a website and then accesses a page of the website, account information of the user accessing the page can be recorded in the log), an identifier of a device accessing the page (e.g., a unique hardware identifier of a computer used by the user), an access time when the page is accessed, and the like. When the redirect loop occurs, a node page can be repeatedly accessed, and the above-described access information can be recorded at each access.

In an exemplary implementation, what information to be recorded can be flexibly set. For example, in the recording manner based on a user dimension, identifiers of devices accessing the page are not recorded; instead, the times are recorded when a user accesses the page. This way, when the sequence of the access times of the page is to be obtained subsequently, the access times corresponding to the same user's identifier can be found based on the user's identifier, and therefore the sequence of the access times can be obtained. In another example, records can be made based on an device dimension, in which manner identifiers of users accessing the page are not recorded; instead, the times are recorded when a device accesses the page. This way, when the sequence of access times of the page is to be obtained subsequently, the access times corresponding to the same device's identifier can be found based on the device's identifier, and therefore the sequence of the access times can be obtained. In still another example, users and devices accessing the page can be both recorded in the access information, while a sequence of access times can be obtained from a log by selecting a search based on a user dimension or a search based on a device dimension.

In addition, a variety of pages may experience a page redirect loop in the embodiments of the present application, such as Personal Computer (PC) pages identified by a Uniform Resource Locator (URL) (i.e., pages having URL addresses), HTML5 (h5) pages, or native pages; alternatively, the pages can be page resources having non-URL identifiers.

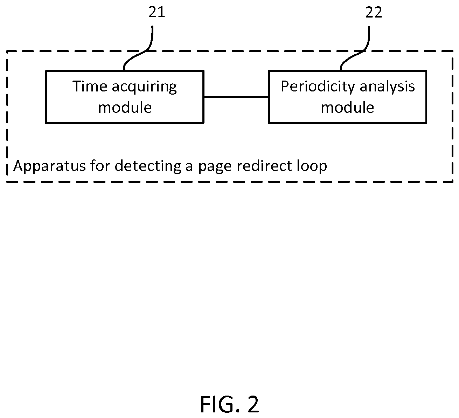

To implement the above-described detection method, the embodiments of the present application further provide an apparatus for detecting a page redirect loop. As shown in FIG. 2, the apparatus can include: a time acquiring module 21 and a periodicity analysis module 22. The time acquiring module 21 may be configured to, for a monitored target page, acquire a sequence of access times at which the target page is accessed, the target page being a node page in a page redirect chain; and
the periodicity analysis module 22 is configured to, when it is analyzed that the access time sequence is periodic, determine that a page redirect loop occurs in the page redirect chain where the target page is included.

In some examples, the sequence of access times includes the access times at which the same user accesses the target page; alternatively, the sequence of access times includes the access times at which the same device accesses the target page.

According to the invention, the periodicity analysis module 22 is configured to use a detection method, such as a spectrum analysis-based Fourier analysis, a periodogram based detection method, or a maximum entropy based detection method, to analyze whether the sequence of access times is periodic and to determine that the sequence of access times is periodic.

In some examples, the target page includes a PC page, an h5 page, or a native page.

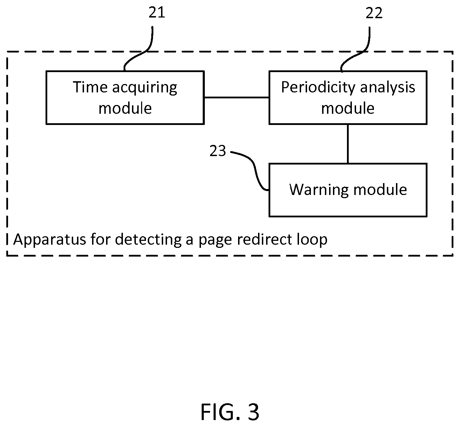

In some examples, as shown in FIG. 3, the apparatus can further include: a warning module 23 configured to send loop alarm information after the periodicity analysis module 22 determines that a page redirect loop occurs in the page redirect chain where the target page is included.

## Claims

1. A method for detecting a page redirect loop at a monitoring system, comprising:
for a monitored target page, acquiring (101) a sequence of access times t1, t2, t3, *...*t*n* at which the target page is accessed, the target page being a node page in a page redirect chain,
analysing the sequence of access times t1, t2, t3, ...tn; determining that the sequence of access times is periodic by determining that the time interval between t1 and t2 is the same as the time interval between t2 and t3, and the same as the time interval between t3 and t4, and the same as the time intervals between the subsequent access times to tn, using a spectrum analysis based Fourier analysis, a periodogram detection method, or a maximum entropy detection method;
when the sequence of access times is periodic, determining (102) that a page redirect loop occurs in the page redirect chain where the target page is included;
in response to determining that a page redirect loop occurs in the page redirect chain, sending alarm information to an agent module, and
the agent module rejecting access to the page when the agent module receives a subsequent request to access the page.

2. The method according to claim 1, wherein the sequence of access times comprises:
a sequence of access times at which a same access user accesses the target page;
or a sequence of access times at which a same access device accesses the target page.

3. The method according to claim 1, wherein the target page includes a Personal Computer (PC) page.

4. The method according to claim 1, wherein the target page includes an HTML5 (h5) page or a native page.

5. An apparatus for detecting a page redirect loop, comprising:
a time acquiring module (21) configured to, for a monitored target page, acquire a sequence of access times t1, t2, t3, *...*t*n*, at which the target page is accessed, the target page being a node page in a page redirect chain,
a period analysis module (22) configured to:
analyse the sequence of access times t1, t2, t3, *...*t*n*;
determine that the sequence of access times is periodic by determining that the time interval between t1 and t2 is the same as the time interval between t2 and t3, and the same as the time interval between t3 and t4, and the same as the time intervals between the subsequent access times to tn, using a spectrum analysis based Fourier analysis, a periodogram detection method, or a maximum entropy detection method, and, when the sequence of access times is periodic, determine that a page redirect loop occurs in the page redirect chain where the target page is included;
and alarm processing module (23) configured to send alarm information to an agent module, in response to determining that a page redirect loop occurs in the page redirect chain
the agent module configured to reject access to the page when the agent module receives a subsequent request to access the page.

6. The apparatus according to claim 5, wherein the sequence of access times comprises:
a sequence of access times at which a same access user accesses the target page;
or a sequence of access times at which a same access device accesses the target page.

7. The apparatus according to claim 5, wherein
the period analysis module is configured to use a spectrum analysis based Fourier analysis, a periodogram detection method, or a maximum entropy detection method to analyze whether the sequence of access times is periodic.

8. The apparatus according to claim 5, wherein the target page includes a Personal Computer (PC) page.

9. The apparatus according to claim 5, wherein the target page includes an HTML (h5) page or a native page.

## Patentansprüche

1. Verfahren zum Erkennen einer Seitenumleitungsschleife in einem Überwachungssystem, das Folgendes umfasst:
für eine überwachte Zielseite Erfassen (101) einer Abfolge von Zugriffszeitpunkten t1, t2, t3, ...tn, zu denen auf die Zielseite zugegriffen wird, wobei die Zielseite eine Knotenseite in einer Seitenumleitungskette ist,
Analysieren der Abfolge von Zugriffszeitpunkten t1, t2, t3, ...tn; Bestimmen, dass die Abfolge von Zugriffszeitpunkten periodisch ist durch Bestimmen, dass das Zeitintervall zwischen t1 und t2 das Gleiche ist wie das Zeitintervall zwischen t2 und t3 und das Gleiche ist wie das Zeitintervall zwischen t3 und t4 und das Gleiche ist wie die Zeitintervalle zwischen den nachfolgenden Zugriffszeitpunkten bis tn, unter Verwendung einer auf Fourier-Analyse basierenden Spektralanalyse, eines Periodogramm-Erkennungsverfahrens oder eines Verfahrens zur Erkennung maximaler Entropie;
wenn die Abfolge von Zugriffszeitpunkten periodisch ist, Bestimmen (102), dass in der Seitenumleitungskette, in der die Zielseite eingeschlossen ist, eine Seitenumleitungsschleife auftritt;
als Reaktion auf Bestimmen, dass in der Seitenumleitungskette eine Seitenumleitungsschleife auftritt, Senden von Alarminformationen an ein Agentenmodul, und
Ablehnen von Zugriff auf die Seite durch das Agentenmodul, wenn es eine nachfolgende Anforderung für Zugriff auf die Seite empfängt.

2. Verfahren nach Anspruch 1, wobei die Abfolge der Zugriffszeitpunkte Folgendes umfasst:
eine Abfolge von Zugriffszeitpunkten, zu denen ein gleicher Zugriffsbenutzer auf die Zielseite zugreift;
oder eine Abfolge von Zugriffszeitpunkten, zu denen eine gleiche Zugriffsvorrichtung auf die Zielseite zugreift.

3. Verfahren nach Anspruch 1, wobei die Zielseite eine Seite eines Personal Computers (PC) einschließt.

4. Verfahren nach Anspruch 1, wobei die Zielseite eine HTML5-(h5)-Seite oder eine native Seite einschließt.

5. Einrichtung zum Erkennen einer Seitenumleitungsschleife, die Folgendes umfasst:
ein Zeiterfassungsmodul (21), das so konfiguriert ist, dass es für eine überwachte Zielseite eine Abfolge von Zugriffszeitpunkten t1, t2, t3, ...tn erfasst, zu denen auf die Zielseite zugegriffen wird, wobei die Zielseite eine Knotenseite in einer Seitenumleitungskette ist,
ein Periodenanalysemodul (22), das konfiguriert ist zum:
Analysieren der Abfolge von Zugriffszeitpunkten t1, t2, t3, ...tn;
Bestimmen, dass die Abfolge von Zugriffszeitpunkten periodisch ist durch Bestimmen, dass das Zeitintervall zwischen t1 und t2 das Gleiche ist wie das Zeitintervall zwischen t2 und t3 und das Gleiche ist wie das Zeitintervall zwischen t3 und t4 und das Gleiche ist wie die Zeitintervalle zwischen den nachfolgenden Zugriffszeitpunkten bis t*n* unter Verwendung einer auf Fourier-Analyse, basierenden Spektralanalyse, eines Periodogramm-Erkennungsverfahrens oder eines Verfahrens zur Erkennung maximaler Entropie, und wenn die Abfolge der Zugriffszeitpunkte periodisch ist, Bestimmen, dass in der Seitenumleitungskette, in der die Zielseite eingeschlossen ist, eine Seitenumleitungsschleife auftritt;
und ein Alarmverarbeitungsmodul (23), das so konfiguriert ist, dass es als Reaktion auf Bestimmen, dass in der Seitenumleitungskette eine Seitenumleitungsschleife auftritt, Alarminformationen an ein Agentenmodul sendet,
wobei das Agentenmodul so konfiguriert ist, dass es Zugriff auf die Seite ablehnt, wenn das Agentenmodul eine nachfolgende Anforderung für Zugriff auf die Seite empfängt.

6. Einrichtung nach Anspruch 5, wobei die Abfolge von Zugriffszeitpunkten Folgendes umfasst:
eine Abfolge von Zugriffszeitpunkten, zu denen ein gleicher Zugriffsbenutzer auf die Zielseite zugreift;
oder eine Abfolge von Zugriffszeitpunkten, zu denen eine gleiche Zugriffsvorrichtung auf die Zielseite zugreift.

7. Einrichtung nach Anspruch 5, wobei
das Periodenanalysemodul so konfiguriert ist, dass es eine auf Fourier-Analyse basierende Spektralanalyse, ein Periodogramm-Erkennungsverfahrens oder ein Verfahren zur Erkennung maximaler Entropie verwendet, um zu analysieren, ob die Abfolge der Zugriffszeitpunkten periodisch ist.

8. Einrichtung nach Anspruch 5, wobei die Zielseite eine Seite eines Personal Computers (PC) einschließt.

9. Einrichtung nach Anspruch 5, wobei die Zielseite eine HTML-(h5)-Seite oder eine native Seite einschließt.

## Revendications

1. Procédé de détection d'une boucle de redirection de page au niveau d'un système de surveillance, comprenant :
pour une page cible surveillée, l'acquisition (101) d'une séquence de temps d'accès t1, t2, t3, ...tn auxquels la page cible est consultée, la page cible étant une page de nœud dans une chaîne de redirection de page,
l'analyse de la séquence de temps d'accès t1, t2, t3, *...*t*n* ; la détermination que la séquence de temps d'accès est périodique en déterminant que l'intervalle de temps entre t1 et t2 est le même que l'intervalle de temps entre t2 et t3, et le même que l'intervalle de temps entre t3 et t4, et le même que les intervalles de temps entre les temps d'accès ultérieurs à t*n,* à l'aide d'une analyse de Fourier basée sur une analyse spectrale, d'un procédé de détection de périodogramme ou d'un procédé de détection d'entropie maximale ;
lorsque la séquence de temps d'accès est périodique, la détermination (102) qu'une boucle de redirection de page se produit dans la chaîne de redirection de page où la page cible est incluse ;
en réponse à la détermination qu'une boucle de redirection de page se produit dans la chaîne de redirection de page, l'envoi d'informations d'alarme à un module agent, et
le rejet, par le module agent, de l'accès à la page lorsque le module agent reçoit une demande ultérieure d'accès à la page.

2. Procédé selon la revendication 1, dans lequel la séquence de temps d'accès comprend :
une séquence de temps d'accès auxquels un même utilisateur accède à la page cible ;
ou une séquence de temps d'accès auxquels un même dispositif d'accès accède à la page cible.

3. Procédé selon la revendication 1, dans lequel la page cible inclut une page d'ordinateur personnel (PC).

4. Procédé selon la revendication 1, dans lequel la page cible inclut une page HTML5 (h5) ou une page native.

5. Appareil de détection d'une boucle de redirection de page, comprenant :
un module d'acquisition de temps (21) configuré pour, pour une page cible surveillée, acquérir une séquence de temps d'accès t1, t2, t3, ...tn, auxquels la page cible est consultée, la page cible étant une page de nœud dans une chaîne de redirection de page,
un module d'analyse de période (22) configuré pour :
analyser la séquence de temps d'accès t1, t2, t3, *...*t*n* ;
déterminer que la séquence de temps d'accès est périodique en déterminant que l'intervalle de temps entre t1 et t2 est le même que l'intervalle de temps entre t2 et t3, et le même que l'intervalle de temps entre t3 et t4, et le même que les intervalles de temps entre les temps d'accès ultérieurs à t*n,* à l'aide d'une analyse de Fourier basée sur une analyse spectrale, d'un procédé de détection de périodogramme ou d'un procédé de détection d'entropie maximale, et, lorsque la séquence de temps d'accès est périodique, déterminer qu'une boucle de redirection de page se produit dans la chaîne de redirection de page où la page cible est incluse ;
et un module de traitement d'alarme (23) configuré pour envoyer des informations d'alarme à un module agent, en réponse à la détermination qu'une boucle de redirection de page se produit dans la chaîne de redirection de page,
le module agent étant configuré pour rejeter l'accès à la page lorsque le module agent reçoit une demande ultérieure d'accès à la page.

6. Appareil selon la revendication 5, dans lequel la séquence de temps d'accès comprend :
une séquence de temps d'accès auxquels un même utilisateur accède à la page cible ;
ou une séquence de temps d'accès auxquels un même dispositif d'accès accède à la page cible.

7. Appareil selon la revendication 5, dans lequel
le module d'analyse de période est configuré pour utiliser une analyse de Fourier basée sur une analyse spectrale, un procédé de détection de périodogramme ou un procédé de détection d'entropie maximale pour analyser si la séquence de temps d'accès est périodique ou non.

8. Appareil selon la revendication 5, dans lequel la page cible inclut une page d'ordinateur personnel (PC).

9. Appareil selon la revendication 5, dans lequel la page cible inclut une page HTML (h5) ou une page native.
